# EUROPÄISCHE PATENTSCHRIFT

(11) **EP 3 769 132 B1**
(45) Veröffentlichungstag und Bekanntmachung des Hinweises auf die Patenterteilung: **01.06.2022**
(21) Anmeldenummer: 19716085.6
(22) Anmeldetag: 22.03.2019
(51) Int. Cl.: G02B 5/30, G02F 1/1335, G02B 27/28, G06F 3/01

(54) **OPTISCHE ANORDNUNG ZUR VERBESSERUNG DER DARSTELLUNGSQUALITÄT EINES DISPLAYS**
OPTICAL ARRANGEMENT FOR IMPROVING THE DISPLAY QUALITY OF A DISPLAY
DISPOSITIF OPTIQUE POUR L'AMÉLIORATION DE LA QUALITÉ D'AFFICHAGE D'UN ÉCRAN

(30) Priorität: 23.03.2018 DE 102018204506
(43) Veröffentlichungstag der Anmeldung: 27.01.2021
(73) Patentinhaber: Wammes und Partner GmbH, 67598 Gundersheim (DE)
(72) Erfinder: WAMMES, Klaus, 67595 Bechtheim (DE)
(74) Vertreter: Tergau & Walkenhorst Patentanwälte PartGmbB
(86) Internationale Anmeldenummer: PCT/EP2019/057322
(87) Internationale Veröffentlichungsnummer: WO 2019/180245

(56) Entgegenhaltungen:
- DE-A1-102014 211 339
- DE-T2- 69 923 152
- US-A- 3 682 531

## Beschreibung

Ein Display (Bildschirm, Screen oder Monitor) ist üblicherweise eine elektrisch angesteuerte Anzeige ohne bewegliche Teile zur optischen Signalisierung von veränderlichen Informationen wie Bildern oder Zeichen. Es sind mannigfache Varianten bekannt, die in praktisch allen Bereichen des täglichen Lebens und der Technik eine immer größere Rolle spielen.

Mehr und mehr werden solche elektronischen Displays zusammen mit zusätzlichen Funktionen wie z. B. berührungsempfindlichen Sensoren, kurz Touch-Sensoren verbaut, die eine Bedienung eines Gerätes mit einem derart ausgerüsteten Display direkt durch Berührung dargestellter Funktionselemente ermöglichen.

Dabei ist in technischer Hinsicht besonders herausfordernd, dass durch diese zusätzlichen Funktionen die Darstellungsqualität und auch die optische Anmutung nicht in Mitleidenschaft gezogen werden. Vielmehr ist gewünscht, solche Komfort-Merkmale wie z. B. "Touch-Bedienung" mit weiteren Komfort- und Qualitätsmerkmalen wie exzellente Darstellungsqualität und möglichst geringe Umgebungslicht-Störungen zu kombinieren. Insbesondere werden ein hoher wahrnehmbarer Kontrast und eine hohe Farbsättigung sowie eine homogene Schwarzdarstellung im ausgeschalteten Zustand bzw. von dunklen Bildbereichen gewünscht.

Aufgabe der Erfindung ist es, eine technische Lösung anzugeben, die in der Lage ist, mit einfachen Mitteln und bei einfacher und kostengünstiger Fertigung die Darstellungsqualität eines Displays, insbesondere eines Displays mit Touch-Funktionalität, im oben genannten Sinne zu verbessern. Insbesondere ist es gewünscht, optische Artefakte aus dem Umgebungslicht signifikant zu unterdrücken bzw. nicht wirksam werden lassen, was zu einem homogenen schwarzen Darstellungsfenster - in beliebiger Größe - im ausgeschalteten bzw. nicht ausgeleuchteten Zustand führen soll.

Druckschriftlicher Stand der Technik ist bekannt aus der DE 699 23 152 T2, der DE 10 2014 211339 A und aus der US 3 682 531 A.

Die Aufgabe wird erfindungsgemäß gelöst durch eine optische Anordnung mit den Merkmalen des Anspruchs 1.

Demnach umfasst die erfindungsgemäße optische Anordnung folgende Komponenten, die entlang einer optischen Achse angeordnet sind:
- eine Lichtquelle für polarisiertes Licht,
- eine Schichtanordnung, die in Blickrichtung eines Betrachters gesehen zumindest einen Polarisationsfilter (Polfilter) und dahinter eine optische Verzögerungsschicht (Retarder) umfasst,
   wobei
- der Polarisationsfilter spaltfrei an der Verzögerungsschicht anliegt,
- sich zwischen der Lichtquelle und der Schichtanordnung ein Zwischenraum befindet, und
- der Zwischenraum ein Volumen um die optische Achse herum umfasst, welches von optisch undurchlässigen und innen nicht-reflektierenden, sondern absorbierenden Randflächen umschlossen ist,
- im Zwischenraum zumindest eine halbdurchlässige Grenzfläche vorhanden ist, die für das von der Lichtquelle emittierte Licht durchlässig ist, und die für in Gegenrichtung auftreffendes Licht zumindest teilweise reflektierend wirkt.

Überraschenderweise wurde gefunden, dass sich mit diesen verhältnismäßig einfachen und günstigen Mitteln, die sich bei fast jedem transparenten Touch-Panel leicht nachrüsten lassen, eine deutliche Verbesserung des von einem Betrachter wahrnehmbaren Bildes, insbesondere in Bezug auf den Schwarzwert und auf den Kontrast, ergibt. Gleichzeitig wird die optische Anmutung im ausgeschalteten Zustand oder bei nicht hinterleuchteten "dunklen" Bildbereichen dergestalt verbessert, dass das Umgebungslicht keine störenden (sichtbaren) Artefakte generiert und so eine homogene schwarze Gesamtfläche entsteht.

Wie aus der detaillierten Beschreibung weiter unten hervorgeht, wird durch die hier spezifizierte Anordnung gewissermaßen einen optische Diode geschaffen, die das Licht der polarisierten Lichtquelle ohne nennenswerte Abschwächung oder sonstige in der Bilddarstellung beobachtbare Änderung in Richtung zum Betrachter hin passieren lässt, die jedoch von außen einfallendes Umgebungslicht im Inneren praktisch "verschluckt" und an der Rückreflektion zum Betrachter hindert. Dadurch werden die oben genannten Vorteile erzielt.

All dies ist möglich ohne die im Stand der Technik notwendige, in Bezug auf Zeit, Maschineneinsatz und Kosten aufwendige sowie technisch riskante Verklebung (engl. optical bonding) der polarisierten Lichtquelle mit anderen optischen Einheiten.

Vorteilhafte Varianten sind Gegenstand der abhängigen Ansprüche und der nachfolgenden detaillierten Beschreibung eines Ausführungsbeispiels.

Vorteilhafterweise umfasst die Lichtquelle ein Display, welches polarisiertes Licht emittiert. Gegebenenfalls wird dazu einem Display, welches an sich unpolarisiertes Licht emittiert, ein zusätzlicher Polarisationsfilter mit relativ zum Retarder angepasster Polarisationsrichtung vorgeschaltet.

Vorteilhafterweise ist das von der Lichtquelle emittierte Licht linear polarisiert. Der Polarisationsfilter der optischen Anordnung ist vorteilhafterweise ein linearer Polarisationsfilter, und die Verzögerungsschicht ist bevorzugt eine λ/4-Schicht, nämlich entweder eine rechtsdrehende +λ/4-Schicht oder eine linksdrehende -λ/4-Schicht.

In zweckmäßiger Ausgestaltung sind der Polarisationsfilter und die Verzögerungsschicht derart beschaffen, dass das von der Lichtquelle emittierte Licht bezüglich seiner Polarisation in Durchlassrichtung durch den Polarisationsfilter tritt. Dadurch ist eine minimale Abschwächung der vom Betrachter wahrnehmbaren Leuchtstärke gewährleistet.

Vorteilhafterweise umfasst die Schichtanordnung neben der Verzögerungsschicht und dem Polarisationsfilter eine Anzahl von weiteren Schichten, wobei bevorzugt alle benachbarten Schichten der Schichtanordnung spaltfrei aneinander anliegen.

In vorteilhafter Ausgestaltung ist in Blickrichtung eines Betrachters gesehen vor dem Polarisationsfilter eine transparente Funktionsschicht angeordnet, insbesondere eine Funktionsschicht, die Touch-Sensoren aufweist.

In Blickrichtung eines Betrachters gesehen ist als vorderste Schicht der Schichtanordnung vorteilhafterweise eine transparente Schutzschicht vorhanden, beispielsweise aus Glas oder Kunststoff, welche insbesondere eine Bedienfläche für eine darunter liegende Funktionsschicht mit Touch-Sensorik bilden kann. Mit anderen Worten kann die transparente Schutzschicht mit weiteren Funktionen wie Bedienfläche, Anmutungs-Objekt, Darstellungsfläche etc. ausgestattet sein und unterliegt weitgehenden Design- bzw. Gestaltungsfreiheiten.

Das spaltfreie Anliegen der Schichten in der optischen Schichtanordnung (engl. optical stack) ist wichtig, damit erstens kein Streulicht von außen in den Strahlenweg eindringen kann, welches andernfalls (durch weitere optische Grenzflächen zwischen optisch unterschiedlich dichten Medien) störende Artefakte erzeugen würde und auch Kontrast und Schwarzwert negativ beeinträchtigen würde. Zweitens sind die optischen Komponenten damit sehr viel einfacher und preisgünstiger in der Applikation verarbeitbar. Alle Funktionslagen von Touch-Schicht über Polarisationsfilter bis Retarder können bereits im Vorfeld des Zusammenbaus mittels einfacher und preisgünstiger (ebener) Verfahren als eine Folie aufgebaut werden und in einem ebenfalls einfachen und günstigen (und ebenen) Prozess auf die hintere Seite einer (multifunktionalen) Schutzschicht aufgebracht werden. In diesem Sinne kann die Schutzschicht in einer bevorzugten Ausprägung als (mechanisches) Konstruktionselement oder Basiselement für die Gesamtanordnung angesehen werden.

Weiterhin ist die zumindest eine halbdurchlässige Grenzfläche im Zwischenraum vorteilhafterweise durch eine zusätzliche optische Schicht, etwa eine Platte oder Folie, verwirklicht, die eigens zu diesem Zweck im Zwischenraum zwischen der Lichtquelle und der oben beschriebenen Schichtanordnung angeordnet ist. Es kann sich besonders bevorzugt aber auch um eine sogenannte parasitäre Schicht innerhalb einer anderen vorhandenen optischen Komponente handeln, die quasi als erwünschte Nebenwirkung einer anderen Funktion die geforderte Halbdurchlässigkeit im oben genannten Sinne verwirklicht. Mit "halbdurchlässig" ist gemeint, dass die Grenzfläche oder Schicht für das von der Lichtquelle emittierte Licht durchlässig ist und für in Gegenrichtung auftreffendes Licht zumindest teilweise reflektierend wirkt. Dadurch wird von außen in die optische Anordnung einfallendes Licht bei der Reflektion hinsichtlich seiner Polarisation derart "verstimmt", dass es nicht wieder nach außen zum Betrachter tritt, sondern am Polarisationsfilter geblockt wird.

Genauer gesagt wird in der bevorzugten Ausgestaltung mit linearem Polfilter und λ/4-Retarder von außen in die optische Anordnung einfallendes Licht hinsichtlich seiner Polarisation zu einem Teil durch ungerichtete (Mehrfach-) Reflektionen "verstimmt", und zum anderen Teil direkt auf den Retarder zurückreflektiert. Beide Teile durchlaufen dann den Retarder ein zweites Mal (nun allerdings in Gegenrichtung "von hinten") und werden dabei erneut um + oder - λ/4 (je nach Aufbau) in der Polarisationsrichtung gedreht. Dadurch kann der überwiegende Anteil des Lichtes den dann anstehenden Polfilter nicht passieren, da dessen Durchlassrichtung um 2 mal λ/4 = λ/2 versetzt zum Hauptteil des am Retarder austretenden Lichtes ist und damit dieses Licht absperrt.

In bevorzugter Ausgestaltung ist der Verbund aus multifunktionaler Schutzschicht, Polarisationsfilter, optischer Verzögerungsschicht und gegebenenfalls weiteren optischen Komponenten innerhalb eines Rahmens oder Gehäuses als Aufsatzteil zum Anbau auf/an oder zur Nachrüstung mit einem Display ausgebildet, wobei die absorbierenden Randflächen die mechanische Verbindung aus diesem Verbund und dem Display darstellen können - beispielsweise in Form eines schwarzen, maschinen-applizierbaren und dauerelastischen Dichtungs-Schaums oder eines selbstklebend ausgestalteten schwarzen Moosgummi-Stanzteils.

Nachfolgend wird ein Ausführungsbeispiel anhand einer Zeichnung beschrieben.

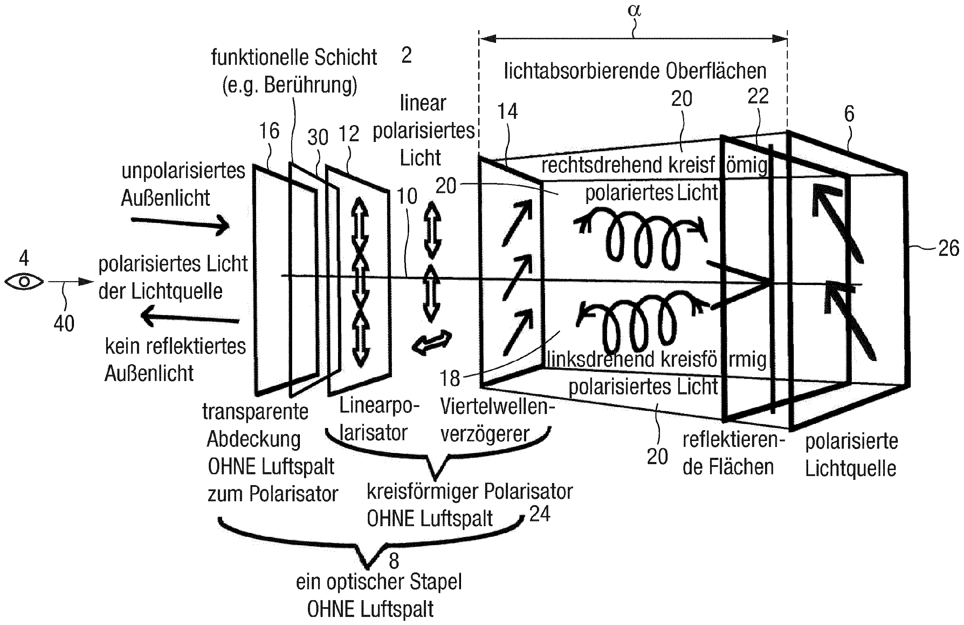

FIG. 1 zeigt nach Art einer schematischen Prinzipdarstellung den Aufbau und die Funktionsweise einer optischen Anordnung gemäß der Erfindung.

Die in FIG. 1 dargestellte optische Anordnung 2 dient zur Verbesserung des von einem Betrachter 4 wahrnehmbaren Kontrastes und der Farbsättigung eines Displays 6 im eingeschalteten Zustand sowie der Erzielung eines "black panel" Effektes - nämlich einer homogen schwarzen Fläche im ausgeschalteten Zustand oder in dunklen Bildregionen. Ohne diese optische Anordnung 2 verändert sich die Sichtbarkeit und die Helligkeit und Farbe des verbauten Displays 6 im ausgeschalteten Zustand mit dem Aufstellungsort bzw. infolge des Umgebungslichts und bildet damit ein optisch störendes oder ablenkendes Element. Mit der optischen Anordnung 2 hingegen bleibt im ausgeschalteten Zustand der Bereich, hinter dem das Display 6 verbaut ist, immer "unsichtbar", weil von dort kein Licht zurück auf den Betrachter 4 fallen kann und damit dieser Bereich homogen schwarz erscheint.

Es handelt sich dabei im Beispiel um ein Display 6, welches linear polarisiertes Licht emittiert. Allgemein kann man das Display 6 als eine flächig ausgedehnte, strukturierte oder modulierte Lichtquelle 26 für polarisiertes Licht ansehen, wobei die Helligkeit der Lichtquelle 26 zwischen einzelnen Bildpunkten variieren kann. Die Polarisationsrichtung des emittierten Lichtes ist hier durch Pfeile innerhalb des Displays 6 angedeutet.

In einem von Null verschiedenen Abstand a vor der Oberfläche des Displays 6 befindet sich eine vorzugsweise - aber nicht notwendigerweise - parallel zum Display 6 ausgerichtete optische Schichtanordnung 8, die in Blickrichtung des Betrachters 4 auf das Display 6 gesehen entlang der optischen Achse 10 einen linearen Polarisationsfilter 12 und dahinter eine Verzögerungsschicht 14 (im Englischen auch Waveplate oder Retarder genannt) umfasst, insbesondere in Gestalt einer λ/4-Schicht oder Platte. Vor dem Polarisationsfilter 12 kann sich ferner eine Funktionsschicht 30 mit Touch-Sensorik und davor eine transparente Schutzschicht 16 als Abdeckung und/oder Konstruktionselement befinden. Die Touch-Sensorik und/oder eine andere Funktionalität können auch in die Schutzschicht 16 integriert sein (multifunktionelle Schutzschicht). Zwischen den einzelnen Schichten der Schichtanordnung 8 befindet sich - abweichend von der rein schematischen zeichnerischen Darstellung in FIG. 1 - keinerlei Spalt. Vielmehr liegt der Polarisationsfilter 12 an seiner dem Display 6 zugewandten Seite unmittelbar flächig an der Verzögerungsschicht 14 an. An seiner vom Display 6 abgewandten Seite liegt der Polarisationsfilter 12 unmittelbar flächig an der Funktionsschicht 30 an, welche wiederum an ihrer anderen Seite unmittelbar flächig an der vordersten Schicht der Schichtanordnung 8, nämlich der transparenten Schutzschicht 16 anliegt.

Der Begriff optische Achse 10 ist hier in einem weiten Sinne zu verstehen und setzt keine strikte Symmetrie der optischen Anordnung 2 voraus. Mit λ ist hier in einer bevorzugten Variante die mittlere Wellenlänge des vom Display 6 emittierten sichtbaren Lichtes bezeichnet.

Die Verzögerungsschicht 14 dreht die Polarisationsrichtung des vom Display 6 in Richtung zum Betrachter 4 hin emittierten linear polarisierten Lichtes um einen definierten Winkel. Der Drehwinkel ist im vorliegenden Fall derart gewählt, dass die Polarisationsrichtung des vom Display 6 emittieren Lichtes nach dem Durchgang durch die Verzögerungsschicht 14 parallel zur Durchlassrichtung des linearen Polarisationsfilters 12 liegt.

Dies ist in FIG. 1 anhand der Pfeile rein beispielhaft dadurch angedeutet, dass die Polarisationsrichtung des vom Display 6 emittierten Lichtes - vom Betrachter 4 aus gesehen - um 45° (= π/4) im Uhrzeigersinn aus der Vertikalen gedreht ist, und die Verzögerungsschicht 14 eine 45°-Drehung der Polarisationsausrichtung im Uhrzeigersinn bewirkt, so dass das Licht anschließend ungehindert den Polarisationsfilter 12, hier mit vertikaler Durchlassrichtung, durchqueren kann. Mit anderen Worten tritt das vom Display 6 emittierte Licht mit minimalen Transmissionsverlusten, jedoch ansonsten hinsichtlich seiner wahrnehmbaren Eigenschaften unverändert durch die Schichtanordnung 8 hindurch und erreicht dann den Betrachter 4.

Der bevorzugt luft- oder gasgefüllte Zwischenraum 18 zwischen dem Display 6 und der Schichtanordnung 8 ist an seinen äußeren Grenzflächen oder Randflächen 20 optisch undurchlässig oder intransparent. Hier im Beispiel mit einem rechteckigen Display 6 und im Wesentlichen deckungsgleich geformter Schichtanordnung 8 handelt es sich um vier im Umriss rechteckige Randflächen 20, die eine Mantelfläche des quaderförmigen Zwischenraumes 18 ausbilden. Optisch undurchlässig bedeutet, dass im Idealfall kein Licht von außen durch die Randflächen 20 in den Zwischenraum 18 eintreten kann. Einzig durch die Schichtanordnung 8 kann Licht von außen (Umgebungslicht) in den Zwischenraum 18 eintreten.

Ferner sind die Randflächen 20 in Bezug auf das im Zwischenraum 18 vorhandene Licht optisch absorbierend, sprich als optische Senke ausgestaltet. Das heißt, dass im Idealfall kein Licht von innen durch die Randflächen 20 nach außen in die Umgebung treten kann, und dass auch keine nennenswerte Reflektion oder Streuung des im Zwischenraum 18 vorhandenen Lichtes an den Randflächen 20 erfolgt. Vielmehr wird von innen auf die Randflächen 20 treffendes Licht zumindest weitgehend absorbiert.

Weiterhin ist im Zwischenraum 18 zwischen dem Display 6 und der Schichtanordnung 8, vorzugsweise - aber nicht notwendigerweise - in paralleler Ausrichtung zum Display 6, mindestens eine, bevorzugt mehrere für das vom Display 6 zum Betrachter 4 hin emittierte Licht optisch transparente Grenzflächen 22, etwa als Bestandteil einer Folie oder sonstigen Schicht, angeordnet, die dessen Polarisation vorteilhafterweise möglichst wenig beeinflussen. In der Gegenrichtung jedoch, also für Licht, das in Richtung von Betrachter 4 zum Display 6 auftrifft, sind diese Grenzflächen 22 zumindest teilweise und vorzugsweise möglichst vollständig reflektierend. Mit anderen Worten ist durch die Grenzfläche(n) 22 im vorliegenden Beispiel die Funktion eines Einwegspiegels oder halb- oder teildurchlässigen Spiegels verwirklicht. Man spricht vereinfacht auch von einer halbdurchlässigen Grenzfläche 22 oder Schicht und meint damit die oben beschriebene Funktionsweise, nämlich in der einen Richtung (teil-) transparent, in der anderen Richtung (teil-) reflektierend.

Anstelle einer eigens zu diesem Zweck vorgesehenen separaten Schicht können die (teil-) reflektierenden / transparenten Grenzflächen auch als sogenannte parasitäre Grenzflächen von ohnehin vorhandenen Folien, Gläsern oder dergleichen (z. B. der Displayoberfläche) verwirklicht sein.

Die Position der halbdurchlässigen Grenzflächen 22 ist frei zwischen polarisierter Lichtquelle 26 und Verzögerungsschicht 14, also innerhalb der durch den Abstand a charakterisierten Wegstrecke wählbar.

In Bezug auf das von außen in die optische Anordnung 2 eintretende unpolarisierte Umgebungslicht kann der Verbund aus Polarisationsfilter 12 und Verzögerungsschicht 14 als zirkularer Polarisationsfilter 24 angesehen werden. Dies ist hier im Beispiel durch eine Helix angedeutet, die einen von außen durch die Schichtanordnung 8 in den Zwischenraum 18 zwischen optischer Schichtanordnung 8 und Display 6 einfallenden, rechtdrehend zirkular polarisierten Lichtstrahl repräsentiert.

An den reflektierenden Schichten 22 wird dieser von außen einfallende Lichtstrahl reflektiert und wird dadurch zum linksdrehend polarisierten, auswärts gerichteten Lichtstrahl, der im Allgemeinen wegen nicht mehr "passender" Polarisation den Verbund aus Verzögerungsschicht 14 und Polarisationsfilter 12 nicht mehr oder nur noch zu einem geringen Teil passieren kann. Dies beruht darauf, dass das Licht an der Verzögerungsschicht 14 noch einmal um λ/4 gedreht wird und damit am Polarisationsfilter 12 in Sperrrichtung ansteht - so dass es am Polarisationsfilter 12 weitestgehend absorbiert wird. Von innen auf die Randflächen 20 treffendes Streulicht wird wie bereits erwähnt ebenfalls absorbiert.

In einem besonders einfach aufgebauten Prototyp ist der frontseitige Polarisationsfilter 12 mit gegebener Polarisationsrichtung orientiert, die Verzögerungsschicht (Retarder) 14 ist als -λ/4-Schicht (also linksdrehend) ausgebildet, und der Polarisationsfilter der hinteren Lichtquelle 26 bzw. des Displays 6 ist mit seiner Polarisationsrichtung auf +45° zur Polarisationsrichtung des Polarisationsfilters 12 orientiert, damit das polarisierte Licht nach Durchlauf durch die Verzögerungsschicht 14 ungehindert durch den Polarisationsfilter 12 austreten kann.

Eine alternative Anordnung mit einem +λ/4-Retarder und einer auf -45° zur Polarisationsrichtung des Polarisationsfilters 12 orientierten polarisierten Lichtquelle 26 funktioniert analog.

Ebenso funktionieren - in entsprechender Verallgemeinerung - alle Kombinationen, in denen eine gegebene polarisierte Lichtquelle 26 mittels geeigneten zusätzlichen Laufzeitanpassungen (durch Retarder) auf eine relative Polarisationsrichtung "passend" zur eingesetzten frontseitigen Kombination aus Polarisationsfilter 12 und Verzögerungsschicht 14 gemäß vorgenannter Beschreibung angepasst wird.

Im Ergebnis tritt das vom Display 6 emittierte Licht ohne nennenswerte Abschwächung durch die optische Anordnung 2 nach außen zum Betrachter 4, während von außen einfallendes und intern reflektiertes Umgebungslicht weitestgehend absorbiert wird und nicht mehr nach außen zum Betrachter 4 tritt. Dadurch wird der Schwarzwert des vom Display 6 dargestellten Bildes deutlich verbessert und der vom Betrachter 4 wahrnehmbare Kontrast wesentlich erhöht sowie der oben beschriebene "black panel" Effekt gewährleistet.

Nun noch einige konstruktive Details und allgemeine Anmerkungen:
Polarisationsfilter, kurz Polfilter, lassen sich heute in sehr unterschiedlichen Verfahren herstellen, z. B. als gereckte Folien auf Basis Poly-Acetat, mikro- und nano-abgeformte Wire-Grid Strukturen auf unterschiedlichsten Substraten, meist mittels UV- oder reaktiv aushärtenden Flüssig-Polymeren oder auch durch Präzisions-Heißprägen geeigneter optischer Strukturen. Auch Lack-ähnliche Schichten mit funktionalen Flüssigkristallen sind heute im Einsatz. Daraus ergibt sich eine sehr große Dicken-Varianz von einigen Nanometern bis zu - je nach Träger - mehreren Millimetern. Im vorliegenden Beispiel bevorzugt sind Schichtstärken bis zu wenigen hundert Mikrometern. Für die Verzögerungsschicht, die Schutzschicht, und die halbdurchlässige Schicht / Grenzflächen gilt entsprechendes.

Der Abstand a zwischen Schichtanordnung 8 und Lichtquelle 26, also die Länge des Zwischenraums 18 ist bevorzugt klein, da die Intensität der Lichtstrahlen im Quadrat zu linearen Weglänge abnimmt, unterliegt aber sonst keiner wesentlichen Einschränkung. In einem zu Testzwecken gefertigten Prototyp beträgt der Abstand a ungefähr 4 bis 5 Millimeter, für Anwendungen in Armaturenbrettern oder Bedienpanelen von z. B. Haushaltsgeräten wird der bevorzugte Abstand bei knapp 1 Millimeter bis zu einigen Zentimetern liegen.

Es versteht sich, dass die in FIG. 1 dargestellte Geometrie der optischen Bauteile rein beispielhaft gewählt ist und in der Praxis verschiedene Variationen aufweisen kann. Insbesondere können das Display 6, die Schichtanordnung 8 und die halbdurchlässige Schicht oder Grenzfläche(n) 22 global (makroskopisch) gesehen gekrümmt / gebogen sein und nur lokal näherungsweise flach sein, solange die mechanischen Verformungsgradienten nicht kleiner werden als minimal die doppelte Wellenlänge der betroffenen Strahlung.

Im vorliegenden Fall ist die optische Anordnung 2 bevorzugt für sichtbares Licht im Wellenlängenbereich von ca. 380 bis 800 Nanometer ausgelegt. Die beschriebene Funktionsweise gilt aber für prinzipiell alle Wellenlängen. Die optische Bandbreite hängt generell von der Qualität und den Material-Eigenschaften der verwendeten optischen Komponenten ab.

Generell gilt, dass alle Schichten / Grenzflächen der optischen Anordnung 2 die optische Achse 10 schneiden, aber die Schichtanordnung 8, die Grenzfläche(n) 22, das Display 6 bzw. die Lichtquelle 26 nicht unbedingt planparallel zueinander oder zu anderen Grenzflächen sein müssen.

Neben den optisch absorbierenden Randflächen 20, die den Zwischenraum 18 zwischen Display 6 und Schichtanordnung 8 umschließen, kann es auch optisch absorbierende Unterteilungen des Zwischenraumes 18 in paralleler Ausrichtung zur optischen Achse 10 geben.

Die optischen Schichten der Schichtanordnung 8 und/oder die teilreflektierende(n) Schicht(en) 22 können insbesondere als flexible Folien ausgebildet sein.

Die dauerhafte Verbindung der optischen Schichten in der Schichtanordnung 8 miteinander kann beispielsweise mittels transparentem, nicht doppelbrechendem Kleber in flüssiger Form oder als Klebeschicht mit oder ohne Träger erfolgen, insbesondere in einem einfachen ebenen Laminierverfahren, sogar in sehr großen Mengen und auch endlos verklebt.

Die den Zwischenraum 18 umschießenden absorbierenden Randflächen 20 bzw. Grenzflächen können mittels unterschiedlichen Materialen mit nicht reflektierenden, dunklen, vorzugsweise schwarzen (weil spektral neutral) Oberflächen verwirklicht werden, z. B. durch schwarzes Moosgummi oder auch mittels CNC-applizierbaren Schaumdichtungen oder entsprechenden Spritzguss-Formteilen oder anderweitigen Formteilen. Diese Formteile können auch für eine mechanische Verbindung zwischen der Lichtquelle 26 und der restlichen optischen Anordnung 2 ausgelegt sein.

Bei dem Display 6 kann es sich um ein beliebiges marktübliches Monochromoder Farb-Display (oder auch eine Sonderanfertigung) handeln, welches linear oder zirkular polarisiertes Licht emittiert, insbesondere um ein Flüssigkristall-Display (LCD). Falls das Display 6 selber kein linear polarisiertes Licht emittiert, kann ein zusätzlicher Polarisationsfilter und/oder ein Retarder verwendet werden, um die im Beispiel vorausgesetzte flächige Lichtquelle 26 für linear polarisiertes Licht zu verwirklichen. Damit ist eine Anwendung der hier beschriebenen Erfindung für jegliche Art von Displaytechnologie möglich, etwa auch bei Plasma-Displays, Elektrolumineszenz-Displays oder OLED-Displays - sogar einfache beleuchtbare Schriften und Symbole in allen Farben können hier verwendet werden. Auch Kombinationen unterschiedlicher Displayarten mit unterschiedlichen Polarisationsrichtungen können gleichzeitig verwendet werden, wenn die einzelnen Displays jeweils mittels geeigneter Retarder auf die gegebene optische Struktur aus frontseitigem Polarisationsfilter 12 und Verzögerungsschicht 14 angepasst werden.

Der Verbund aus Schichtanordnung 8, teilreflektierenden Schichten 22 und ggf. den absorbierenden Randflächen 18 kann innerhalb eines Rahmens oder Gehäuses als Aufsatzteil ausgebildet sein, welches auf das Display 6 aufgesetzt und dauerhaft mit ihm verbunden wird. Insbesondere bleibt damit das eingesetzte Display 6 jederzeit und problemlos für Reparaturen und/oder Upgrades / Verbesserungen / Produktvarianten austauschbar.

Bevorzugte Anwendungen liegen beispielsweise im Bereich des Automobilbaus, des Flugzeugbaus, des Schiffbaus und des Eisenbahnbaus, jeweils für die Cockpit- oder Fahrer- oder Passagier-Instrumentierung. Weitere bevorzugte Anwendungen liegen im Bereich von Anzeigen für Haushaltsgeneräte. Generell lassen sich im Rahmen der vorliegenden Erfindung beliebige Touch-Panel-Applikationen in allen Industriebereichen und Anwendungen verwirklichen - überall dort, wo Anzeige-Displays bevorzugt mit zusätzlichen Funktionen wie z. B. Touch-Bedienung, Privacy-Film etc. als eine zusammensetzbare Kombinationseinheit eingesetzt bzw. verbaut werden, wo also eine untrennbare Einheit NICHT erforderlich oder gewünscht ist.

### Bezugszeichenliste

- 2: optische Anordnung
- 4: Betrachter
- 6: Display
- 8: Schichtanordnung
- 10: optische Achse
- 12: Polarisationsfilter (Polfilter)
- 14: Verzögerungsschicht (Retarder)
- 16: Schutzschicht
- 18: Zwischenraum
- 20: Randfläche
- 22: Grenzfläche
- 24: zirkularer Polarisationsfilter
- 26: Lichtquelle
- 30: Funktionsschicht
- 40: Blickrichtung

- a: Abstand

## Patentansprüche

1. Optische Anordnung (2) mit zumindest folgenden Komponenten, die entlang einer optischen Achse (10) angeordnet sind:
• einer Lichtquelle (26) für polarisiertes Licht,
• einer Schichtanordnung (8), die in Blickrichtung (40) eines Betrachters (4) gesehen zumindest einen Polarisationsfilter (12) und dahinter eine optische Verzögerungsschicht (14) umfasst,
wobei
• der Polarisationsfilter (12) spaltfrei an der Verzögerungsschicht (14) anliegt,
• sich zwischen der Lichtquelle (26) und der Schichtanordnung (8) ein Zwischenraum (18) befindet, und
• der Zwischenraum (18) ein Volumen um die optische Achse (10) herum umfasst, welches von optisch undurchlässigen und innen nicht-reflektierenden, sondern absorbierenden Randflächen (20) umschlossen ist,
• im Zwischenraum (18) zumindest eine halbdurchlässige Grenzfläche (22) vorhanden ist, die für das von der Lichtquelle (26) emittierte Licht durchlässig ist, und die für in Gegenrichtung auftreffendes Licht zumindest teilweise reflektierend wirkt.

2. Optische Anordnung (2) nach Anspruch 1, wobei die Lichtquelle (26) ein elektronisches Display (6) und gegebenenfalls einen vorgelagerten zusätzlichen Polarisationsfilter umfasst.

3. Optische Anordnung (2) nach Anspruch 1 oder 2, wobei das von der Lichtquelle (26) emittierte Licht linear polarisiert ist.

4. Optische Anordnung (2) nach Anspruch 3, wobei die Polarisationsebene der Lichtquelle (26) relativ zur Verzögerungsschicht (14) einstellbar ist.

5. Optische Anordnung (2) nach einem der vorherigen Ansprüche, wobei der Polarisationsfilter (12) ein linearer Polarisationsfilter ist.

6. Optische Anordnung (2) nach einem der vorherigen Ansprüche, wobei die Verzögerungsschicht (14) eine rechtsdrehende +λ/4-Schicht oder eine links-drehende - λ/4-Schicht ist.

7. Optische Anordnung (2) nach einem der vorherigen Ansprüche, wobei der Polarisationsfilter (12) und die Verzögerungsschicht (14) derart beschaffen sind, dass das von der Lichtquelle (26) emittierte Licht bezüglich seiner Polarisation in Durchlassrichtung durch den Polarisationsfilter (12) tritt.

8. Optische Anordnung (2) nach einem der vorherigen Ansprüche, wobei die Schichtanordnung (8) neben der Verzögerungsschicht (14) und dem Polarisationsfilter (12) eine Anzahl von weiteren Schichten (16, 30) umfasst, und wobei alle benachbarten Schichten der Schichtanordnung (8) spaltfrei aneinander anliegen.

9. Optische Anordnung (2) nach Anspruch 8, wobei in Blickrichtung (40) eines Betrachters (4) gesehen vor dem Polarisationsfilter (12) eine transparente Funktionsschicht (30) angeordnet ist.

10. Optische Anordnung (2) nach Anspruch 9, wobei die Funktionsschicht (30) Touch-Sensoren aufweist.

11. Optische Anordnung (2) nach einem der vorherigen Ansprüche, wobei in Blickrichtung (40) eines Betrachters (4) gesehen als vorderste Schicht der Schichtanordnung (8) eine transparente Schutzschicht (16) vorhanden ist.

12. Optische Anordnung (2) nach Anspruch 11, wobei die Schutzschicht (16) eine Bedienfläche bildet.

13. Optische Anordnung (2) nach einem der vorherigen Ansprüche, wobei die halbdurchlässige Grenzfläche (22) durch eine separate optische Schicht (22) verwirklicht ist, die im Zwischenraum (20) angeordnet ist.

14. Optische Anordnung (2) nach einem der vorherigen Ansprüche, wobei die Schichtanordnung (8) innerhalb eines Rahmens oder Gehäuses als Aufsatzteil zur Anbringung an einem Display (6) ausgebildet ist.

15. Anzeige mit einem Display (6) und mit einer optischen Anordnung (2) nach einem der vorherigen Ansprüche zur Verbesserung des wahrnehmbaren Kontrastes des Displays (6) und zur Eliminierung störender Umgebungslicht-Einflüsse.

## Claims

1. Optical arrangement (2) comprising at least the following components which are arranged along an optical axis (10):
• a light source (26) for polarised light,
• a layer arrangement (8) which, viewed in the viewing direction (40) of a viewer (4), comprises at least one polarisation filter (12) and an optical retardation layer (14) behind the same,
wherein
• the polarisation filter (12) abuts the retardation layer (14) free of gaps,
• an interstice (18) is located between the light source (26) and the layer arrangement (8), and
• the interstice (18) comprises a volume about the optical axis (10), said volume being surrounded by optically impermeable and internally non-reflecting, but absorptive peripheral surfaces (20),
• in the interstice (18), there is at least one semi-permeable boundary surface (22) which is permeable to the light emitted by the light source (26) and is at least partially reflective for light incident in the opposite direction.

2. Optical arrangement (2) according to claim 1, wherein the light source (26) comprises an electronic display (6) and, if necessary, an upstream additional polarisation filter.

3. Optical arrangement (2) according to claim 1 or 2, wherein the light emitted by the light source (26) is linearly polarised.

4. Optical arrangement (2) according to claim 3, wherein the polarisation plane of the light source (26) is adjustable relative to the retardation layer (14).

5. Optical arrangement (2) according to one of the preceding claims, wherein the polarisation filter (12) is a linear polarisation filter.

6. Optical arrangement (2) according to one of the preceding claims, wherein the retardation layer (14) is a clockwise-rotating + λ/4 layer or an anticlockwise-rotating -λ/4 layer.

7. Optical arrangement (2) according to one of the preceding claims, wherein the polarisation filter (12) and the retardation layer (14) are constructed in such a way that the light emitted by the light source (26) passes through the polarisation filter (12) in a forward direction with regard to its polarisation.

8. Optical arrangement (2) according to one of the preceding claims, wherein the layer arrangement (8) comprises a number of further layers (16, 30) in addition to the retardation layer (14) and the polarisation filter (12), and wherein all the adjacent layers of the layer arrangement (8) abut each other free of gaps.

9. Optical arrangement (2) according to claim 8, wherein, viewed in the viewing direction (40) of a viewer (4), a transparent functional layer (30) is arranged in front of the polarisation filter (12).

10. Optical arrangement (2) according to claim 9, wherein the functional layer (30) has touch sensors.

11. Optical arrangement(2) according to one of the preceding claims, wherein, viewed in the viewing direction (40) of a viewer (4), a transparent protective layer (16) is the foremost layer of the layer arrangement (8).

12. Optical arrangement (2) according to claim 11, wherein the protective layer (16) forms a control surface.

13. Optical arrangement (2) according to one of the preceding claims, wherein the semi-permeable boundary surface (22) is realised by a separate optical layer (22) which is arranged in the interstice (20).

14. Optical arrangement (2) according to one of the preceding claims, wherein the layer arrangement (8) is formed within a frame or housing as a fixture for attachment to a display (6).

15. Display with a display (6) and comprising an optical arrangement (2) according to one of the preceding claims for improving the perceptible contrast of the display (6) and for eliminating disturbing ambient light influences.

## Revendications

1. Dispositif optique (2) comprenant au moins les composantes suivantes, qui sont disposées le long d'un axe optique (10) :
- une source de lumière (26) pour une lumière polarisée,
- un agencement de couches (8), qui comprend, vu dans la direction de regard (40) d'un observateur (4), au moins un filtre de polarisation (12) et derrière celui-ci un film retardateur (14),
dans lequel :
- le filtre de polarisation (12) est attenant sans intervalle au film retardateur (14),
- un intervalle (18) se trouve entre la source de lumière (26) et l'agencement de couches (8), et
- l'intervalle (18) comprend un volume autour de l'axe optique (10), qui est entouré par des surfaces de bord (20) optiquement opaques et non réfléchissantes à l'intérieur, mais absorbantes,
- au moins une surface limite (22) semi-transparente est prévue dans l'intervalle (18), laquelle est transparente à la lumière émise par la source de lumière (26), et agit au moins en partie de façon réfléchissante pour la lumière incidente dans le sens inverse.

2. Dispositif optique (2) selon la revendication 1, dans lequel la source de lumière (26) comprend un écran électronique (6) et éventuellement un filtre de polarisation supplémentaire disposé en amont.

3. Dispositif optique (2) selon la revendication 1 ou 2, dans lequel la lumière émise par la source de lumière (26) est polarisée de façon linéaire.

4. Dispositif optique (2) selon la revendication 3, dans lequel le plan de polarisation de la source de lumière (26) est réglable par rapport au film retardateur (14).

5. Dispositif optique (2) selon l'une des revendications précédentes, dans lequel le filtre de polarisation (12) est un filtre de polarisation linéaire.

6. Dispositif optique (2) selon l'une des revendications précédentes, dans lequel le film retardateur (14) est une couche +λ/4 à rotation à droite ou une couche -λ/4 à rotation à gauche.

7. Dispositif optique (2) selon l'une des revendications précédentes, dans lequel le filtre de polarisation (12) et le film retardateur (14) sont agencés de telle sorte que la lumière émise par la source de lumière (26), quant à sa polarisation, entre en traversant le filtre de polarisation (12) dans le sens de transmission.

8. Dispositif optique (2) selon l'une des revendications précédentes, dans lequel l'agencement de couches (8) comprend, outre le film retardateur (14) et le filtre de polarisation (12), un certain nombre de couches supplémentaires (16, 30), et dans lequel toutes les couches adjacentes de l'agencement de couches (8) sont attenantes l'une à l'autre sans intervalle.

9. Dispositif optique (2) selon la revendication 8, dans lequel, vu dans la direction de regard (40) d'un observateur (4), une couche fonctionnelle (30) transparente est disposée devant le filtre de polarisation.

10. Dispositif optique (2) selon la revendication 9, dans lequel la couche fonctionnelle (30) comprend des capteurs tactiles.

11. Dispositif optique (2) selon l'une des revendications précédentes, dans lequel, vu dans la direction de regard (40) d'un observateur (4), une couche de protection transparente (16) est prévue en tant que couche au premier plan de l'agencement de couches (8).

12. Dispositif optique (2) selon la revendication 11, dans lequel la couche de protection (16) forme une surface de commande.

13. Dispositif optique (2) selon l'une des revendications précédentes, dans lequel la surface limite (22) semi-transparente est réalisée par une couche optique séparée (22), qui est disposée dans l'intervalle (20).

14. Dispositif optique (2) selon l'une des revendications précédentes, dans lequel l'agencement de couches (8) est formé à l'intérieur d'un cadre ou d'un boîtier sous forme d'une pièce rapportée à poser sur un écran (6).

15. Dispositif d'affichage comprenant un écran (6) et un dispositif optique (2) selon l'une des revendications précédentes pour améliorer le contraste perceptible de l'écran (6) et pour éliminer des influences perturbatrices de la lumière environnante.
